## Europäisches Patentamt
## European Patent Office
## Office européen des brevets

(19)

(11) Veröffentlichungsnummer : **0 333 896 B1**

(12) # EUROPÄISCHE PATENTSCHRIFT

(45) Veröffentlichungstag der Patentschrift :
**12.06.91 Patentblatt 91/24**

(51) Int. Cl.$^5$ : **A01G 11/00**

(21) Anmeldenummer : **88104534.8**

(22) Anmeldetag : **22.03.88**

(54) **Verfahren zum Behandeln einer aufgelockerten Bodenschicht mittels Wasserdampf.**

(43) Veröffentlichungstag der Anmeldung :
**27.09.89 Patentblatt 89/39**

(45) Bekanntmachung des Hinweises auf die
Patenterteilung :
**12.06.91 Patentblatt 91/24**

(84) Benannte Vertragsstaaten :
**AT BE CH DE FR IT LI NL**

(56) Entgegenhaltungen :
**EP-A- 0 192 285**
**DE-A- 3 518 012**
**DE-A- 3 601 490**

(73) Patentinhaber : **Fink, Werner**
**Harzbergstrasse 1**
**W-7141 Grossbottwar (DE)**

(72) Erfinder : **Fink, Werner**
**Harzbergstrasse 1**
**W-7141 Grossbottwar (DE)**

(74) Vertreter : **Vogel, Georg**
**Pat.-Ing. Georg Vogel Hermann-Essig-Strasse
35**
**W-7141 Schwieberdingen (DE)**

## Beschreibung

Die Erfindung betrifft ein Verfahren zum Behandeln einer aufgelockerten Bodenschicht mittels Wasserdampf, der unter Druck zwischen eine die zu behandelnde Bodenschicht abdeckende Abdeckfolie und die Oberfläche der Bodenschicht eingeleitet wird und über auf die Oberfläche der zu behandelnden Bodenschicht aufgelegtes Rohrsystem mit Abzweigleitungen, die mit ihren offenen Enden in einem vorgegebenen Raster bis zur Grenzschicht zwischen der zu behandelnden Bodenschicht und dem festen Untergrund eingesteckt werden, mittels eines Unterdruckerzeugers abgesaugt wird.

Ein Verfahren dieser Art ist durch die DE-C-35 18 012 bekannt. Der Unterdruckerzeuger zieht dabei den Wasserdampf in die aufgelockerte Bodenschicht und zwar bis in den Bereich der Grenzschicht zwischen der aufgelockerten Bodenschicht und dem festen Untergrund.

Es ist Aufgabe der Erfindung, ein Verfahren zum Behandeln einer aufgelockerten Bodenschicht mittels Wasserdampf der eingangs erwähnten Art so weiterzubilden, daß der Wirkungsgrad der Absaugung des Wasserdampfes so verbessert wird, daß mit wenig Wasserdampf auch die tiefsten Bereiche der Bodenschicht mit Wasserdampf behandelt werden, wobei während des Absaugbetriebes das Rohrsystem stets von Bodenteilen freigehalten werden kann.

Diese Aufgabe wird nach der Erfindung dadurch gelöst, daß als Unterdruckerzeuger ein Ventilator mit einer Unterdruck- Ansaugleitung und einer Überdruck-Ausgangsleitung verwendet wird, der während des Absaugbetriebes wenigstens einmal zur Einleitung eines Überdruckes über die Ansaugleitung in das Rohrsystem zur Bildung von Luftkammern im Bereich der offenen Enden der Abzweigleitungen umgeschaltet wird.

Durch die Verwendung eines umschaltbaren Ventilators mit einer Unterdruck-Ansaugleitung und einer Überdruck-Abgangsleitung können innerhalb des Ansaugbetriebes Phasen einbezogen werden, in denen mit Druckluft das Rohrsystem gereinigt wird. Dabei entstehen im Bereich der offenen Enden der Abzweigleitungen, d.h. in der Grenzschicht zwischen der aufgelockerten Bodenschicht und dem festen Untergrund, Luftkammern, die in der folgenden Absaugphase den Eintritt des angesaugten Wasserdampfes erleichtern.

Die Umschaltung des Ventilators kann nach einer Ausgestaltung mittels eines manuell umschaltbaren Ventils vorgenommen werden, das einfach die Unterdruck-Ansaugleitung vom Rohrsystem abschaltet und die Überdruck-Abgangsleitung an das Rohrsystem anschaltet.

Die Umschaltung des Ventilators kann aber auch mittels eines elektrisch steuerbaren Ventils vorgenommen werden.

Nach einer besonders vorteilhaften Ausgestaltung kann jedoch auch vorgesehen sein, daß die Unterdruck-Ansaugleitung und die Überdruck-Abgangsleitung des Ventilators mit Schnellkupplungen versehen werden und daß die Umschaltung des Ventilators durch Vertauschen der daran angekuppelten Leitungen vorgenommen wird. Die Umschaltung kann dabei ohne zusätzliches Ventil durch einfaches Umkuppeln der am Ventilator angekoppelten abgehenden Leitungen vorgenommen werden.

Die Reinigung des Rohrsystems kann nach einer Ausgestaltung auch so abgewandelt werden, daß die Umschaltung des Ventilators während des Absaugbetriebs periodisch jeweils für eine vorgebbare, vorzugsweise einstellbare Zeit wiederholt wird.

Ist vorgesehen, daß die Umschaltung des Ventilators nach dessen Inbetriebnahme und zu Beginn des Absaugbetriebes für eine vorgegebene Schutzzeit verhindert wird, dann wird gerade in der Anfangsphase des Absaugbetriebes das Eindringen des Wasserdampfes bis in die Grenzschicht zwischen der zu behandelnden Bodenschicht und dem festen Untergrund nicht beeinträchtigt. Es ist dazu vorteilhafterweise die Ausgestaltung so, daß die Umschaltung des Ventilators nur gegen Ende des Absaugbetriebes vorgenommen wird.

Der Wirkungsgrad der Behandlung der Bodenschicht mit Wasserdampf läßt sich nach einer weiteren Ausgestaltung dadurch noch verbessern, daß in den Endphasen des Absaugbetriebes der über die Überdruck-Abgangsleitung des Ventilators abgegebene angesaugte Wasserdampf in den Raum zwischen der Abdeckfolie und der Oberfläche der zu behandelnden Bodenschicht eingeleitet wird. Die Behandlung der Bodenschicht mit Wasserdampf erfolgt dann in einem Zirkulationskreislauf.

Damit zu Beginn des Absaugbetriebes das unter die Abdeckfolie eingebrachte Dampfpolster gleichmäßig über die gesamte Oberfläche auf die zu behandelnde Bodenschicht einwirken und eine gleichmäßige Bedampfung erreicht werden kann, ist weiterhin vorgesehen, daß in der Anfangsphase des Absaugbetriebes mit reduziertem oder mit langsam zunehmendem Unterdruck abgesaugt wird.

Die Erfindung wird anhand eines in den Zeichnungen dargestellten Ausführungsbeispiels näher erläutert. Es zeigt:

Fig. 1 in Draufsicht die für das Verfahren nach der Erfindung erforderliche Vorrichtung,

Fig. 2 einen Querschnitt durch die zu behandelnde Bodenschicht mit den Vorrichtungen zum Absaugen des Wasserdampfes im Absaugbetrieb und

Fig. 3 einen der Fig. 2 entsprechenden Querschnitt im zusätzlichen Druckluftbetrieb.

Ein vorgegebener Bereich 10 einer aufgelockerten Bodenschicht soll mit Wasserdampf behandelt werden, um den Boden wieder aufzubereiten, ohne die enthaltenden Mineralien so umzuwandeln, daß für die weitere Nutzung des Bodens der Anteil der Vergiftungen reduziert ist.

Auf die Oberfläche der Bodenschicht wird der Rohrstrang mit den Rohrabschnitten 24 und den Rohrkupplungen 23 ausgelegt. Das eine Ende des Rohrstranges ist über die Leitung 22 mit dem Unterdruckerzeuger 20 verbunden, der mit hohem Ansaugdruck und großer Ansaugmenge arbeitet.

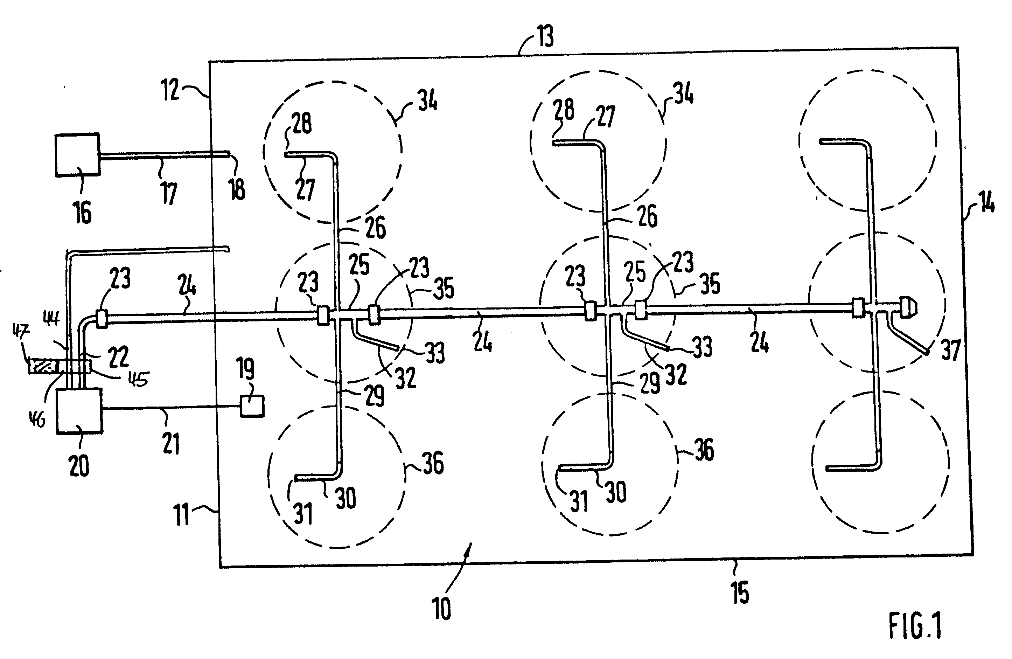

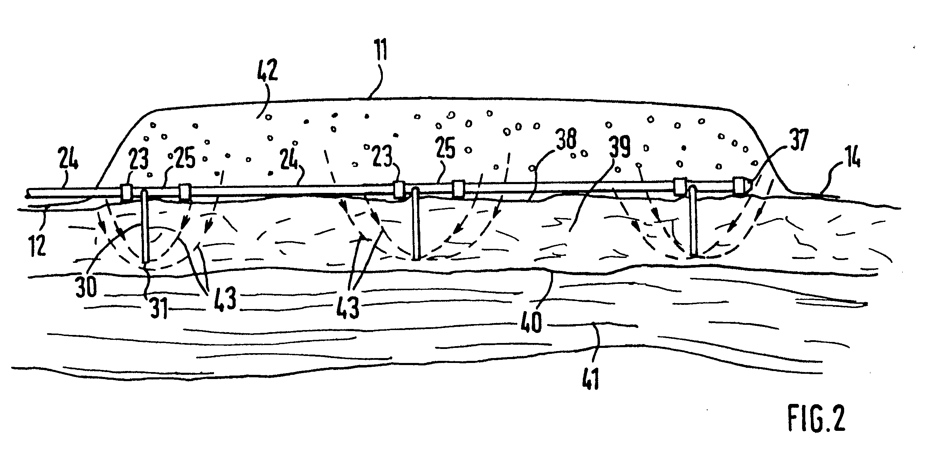

Ein Druckmesser 19 steuert über die Leitung 21 den Unterdruckerzeuger 20 in Abhängigkeit von einem gemessenen Druck, wie noch gezeigt wird. In dem Rohrstrang ist nach jedem Rohrabschnitt 24 ein Verteilerstück 25 mittels zweier Rohrkupplungen 23 eingeschleift, an dem eine kurze Abzweigleitung 32 und zwei lange Abzweigleitungen 26 und 29 abzweigen. Diese Abzweigleitungen 26, 29 und 32 sind vorzugsweise als Schlauchabschnitte ausgebildet, die über an sich bekannte Verschraubungen mit dem zugeordneten Verteilerstück 25 verbunden sind. Die offenen Enden 28, 31 und 33 der Abzweigleitungen 26, 29 und 32 können auch Teil von Rohrstücken 27 bzw. 30 mit Anschlußbogen sein, damit diese leichter in die Bodenschicht 39 eingesteckt werden können, wie Fig. 2 erkennen läßt. Dabei wird jeweils die kurze Abzweigleitung 32 in der Nähe des Rohrstranges in die Bodenschicht 39 eingesteckt, während die Abzweigleitungen 26 und 29 senkrecht zum Rohrstrang auf die Oberfläche 38 gelegt und deren offene Enden 28 und 31 in etwa demselben Abstand zum Rohrstrang eingesteckt werden, der etwa der Länge der Rohrabschnitte 24 von ungefähr 2 Metern entspricht. Die Ansaugbereiche 34, 35 und 36 sind in Fig. 1 mit Kreisen markiert. Das Raster dieser Ansaugbereiche, in deren Mittelpunkt jeweils ein offenes Ende der Abzweigleitungen 26, 29 und 32 angeordnet ist, verteilt sich gleichmäßig über den Bereich 10, der nach dem Auslegen des Rohrstranges und dem Einstecken der offenen Enden 28, 31 und 33 der Abzweigleitungen 26, 29 und 32 mittels der Abdeckfolie 11 abgedichtet wird. Dazu werden die Ränder 12, 13, 14 und 15 der Abdeckfolie 11 mit Gewichten, wie Ketten, Steine und dgl. belastet. Der Dampferzeuger 16 gibt über das offene Ende 18 der Leitung 17 den erzeugten Wasserdampf in den Raum zwischen der Oberfläche 38 der Bodenschicht 39 und der Abdeckfolie 11, die damit aufgeblasen wird, wie dem Schnitt nach Fig. 2 zu entnehmen ist.

Registriert der Druckmesser 19 einen vorgegebenen maximalen Druckwert, dann wird der Unterdruckerzeuger 20 eingeschaltet. Da das Ende des Rohrstranges mit dem Stopfen 37 verschlossen ist, werden über alle offenen Enden 28, 31 und 33 der Abzweigleitungen 26, 29 und 32 Luftströme 43 angesaugt, die die Luft in der zu behandelnden Bodenschicht 39 absaugen und damit den über der Oberfläche 38 ruhenden Wasserdampf 42 in die Bodenschicht 39 einsaugen. Dabei wirkt der Druck des Wasserdampfes unterstützend. Der Druck des Wasserdampfes unterhalb der Abdeckfolie 11 bricht zusammen. Ist ein vorgegebener minimaler Druckwert erreicht, dann schaltet der Druckmesser den Unterdruckerzeuger 20 aus. Der Druck des Wasserdampfes steigt unter der Abdeckfolie 11 wieder an, bis beim Erreichen des vorgegebenen maximalen Druckwertes auch der Unterdruckerzeuger 20 wieder eingeschaltet wird usw.

Die Zufuhr an Wasserdampf vom Wasserdampferzeuger 16 bleibt für eine vorgegebene Behandlungszeit konstant. Ist die Behandlungszeit beendet, dann können die Teile der Vorrichtung zur Durchführung des Verfahrens für das Behandeln einer anderen Bodenschicht verwendet werden, wobei die Verlegung des Rohrstranges mit den Abzweigleitungen, das Abdecken mit der Abdeckfolie sowie das Anschließen des Unterdruckerzeugers und des Wasserdampferzeugers keine Schwierigkeiten bereitet.

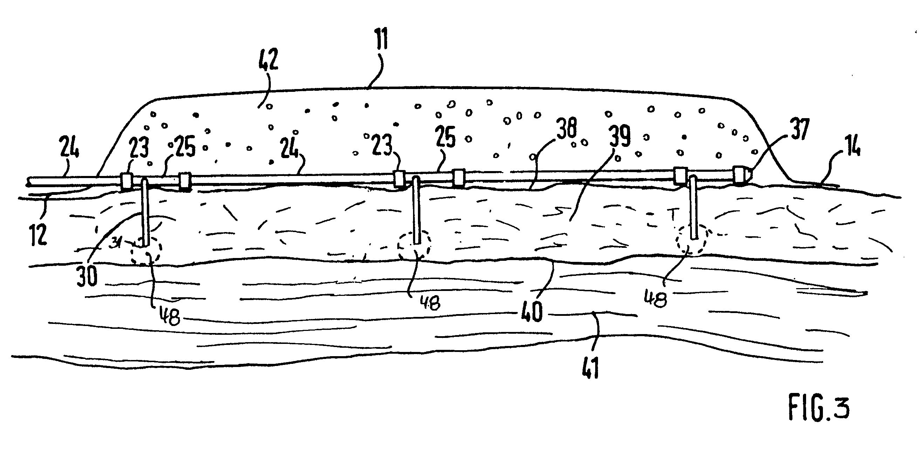

Wie der Fig. 1 zu entnehmen ist, wird als Unterdruckerzeuger 20 ein Ventilator verwendet, der eine Unterdruck-Ansaugleitung 22 und eine Überdruck-Abgangsleitung 44 aufweist. Im Absaugbetrieb ist die Unterdruck-Ansaugleitung 22 über das Ventil 45 mit dem Eingang zum Rohrsystem verbunden, während die Überdruck-Abgangsleitung 44 in den Raum zwischen der Abdeckfolie 11 und der Oberfläche 38 der Bodenschicht 39 eingeführt ist, wie der Ventilabschnitt 46 erkennen läßt. Wird das Ventil 45 umgeschaltet, dann vertauscht der Ventilabschnitt 47 die Leitungen. Die Überdruck-Abgangsleitung 44 ist mit dem Rohrsystem verbunden, so daß Druckluft eingeleitet wird, die im Bereich der offenen Enden 28, 31 und 33 des Rohrsystems austritt und zur Bildung von Luftkammern 48 führt, wie Fig. 3 zeigt. Diese Luftkammern 48 erleichtern in der anschließenden Absaugphase das Eintreten des Wasserdampfes in das Rohrsystem.

Die Verstellung des Ventils 45 kann manuell erfolgen. Es kann jedoch auch ein elektrisch steuerbares Ventil 45 eingesetzt werden. Sind die Unterdruck-Ansaugleitung 22 und die Überdruck-Abgangsleitung 44 des Ventilators und die abgehenden Leitungen mit Schnellkupplungen versehen, dann läßt sich durch Vertauschen der Abgangsleitungen die Arbeitsweise des Ventilators ohne Ventil umschalten.

Der Ventilator kann während des Absaugbetriebes nur einmal oder periodisch wiederholt für eine vorgegebene, vorzugsweise einstellbare Zeit auf den Druckluftbetrieb umgeschaltet werden.

Es ist jedoch zweckmäßig, in der Anfangsphase des Absaugbetriebes keine Druckluft dem Rohrsystem zuzuführen, damit das Eindringen des Wasserdampfes in die zu behandelnde Bodenschicht nicht beeinträchtigt wird. Es werden daher vorzugsweise nur gegen Ende des Absaugbetriebes derartige Druckluftphasen eingeführt. In der Anfangsphase des Absaugbetriebes wird zudem auch mit reduziertem Unterdruck oder mit langsam zunehmendem Unterdruck gearbeitet, damit sich das Dampfpolster unter der Abdeckfolie gleichmäßig auf die zu behandelnde Bodenschicht auswirken kann. Dies ist für eine gleichmäßige Bedampfung der von der Abdeckfolie überdeckten Bodenschicht sehr wichtig.

Gegen Ende des Absaugbetriebes tritt an der Überdruck-Abgangsleitung 44 des Ventilators Wasserdampf auf, der wieder dem Raum zwischen der Abdeckfolie 11 und der Oberfläche 38 der zu behandelnden Bodenschicht 39 eingeführt wird. Damit wird gegen Ende des Absaugbetriebes eine Zirkulation des Wasserdampfes erreicht, die nicht nur die Bedampfung verbessert, sondern auch den Wirkungsgrad des Verfahrens erhöht.

## Ansprüche

1. Verfahren zum Behandeln einer aufgelockerten Bodenschicht mittels Wasserdampf, der unter Druck zwischen eine die zu behandelnde Bodenschicht (39) abdeckende Abdeckfolie (11) und die Oberfläche (38) der Bodenschicht (39) eingeleitet wird und über ein auf die Oberfläche (38) der zu behandelnden Bodenschicht (39) aufgelegtes Rohrsystem mit Abzweigleitungen (26, 29, 32), die mit ihren offenen Enden (28, 31, 33) in einem vorgegebenen Raster bis zur Grenzschicht (40) zwischen der zu behandelnden Bodenschicht und dem festen Untergrund eingesteckt werden, mittels eines Unterdruckerzeugers (20) abgesaugt wird, dadurch gekennzeichnet, daß als Unterdruckerzeuger (20) ein Ventilator mit einer Unterdruck-Ansaugleitung (22) und einer Überdruck-Ausgangsleitung (44) verwendet wird, der während des Absaugbetriebes wenigstens einmal zur Einleitung eines Überdruckes über die Ansaugleitung (22) in das Rohrsystem zur Bildung von Luftkammern (48) im Bereich der offenen Enden (28, 31, 33) der Abzweigleitungen (26, 29, 32) umgeschaltet wird.

2. Verfahren nach Anspruch 1, dadurch gekennzeichnet, daß die Umschaltung des Ventilators mittels eines manuell umschaltbaren Ventils (45) vorgenommen wird.

3. Verfahren nach Anspruch 1, dadurch gekennzeichnet, daß die Umschaltung des Ventilators mittels eines elektrisch steuerbaren Ventils vorgenommen wird.

4. Verfahren nach Anspruch 1, dadurch gekennzeichnet, daß die Unterdruck-Ansaugleitung (22) und die Überdruck-Abgangsleitung (44) des Ventilators mit Schnellkupplungen versehen werden und daß die Umschaltung des Ventilators (20) durch Vertauschen der daran angekuppelten Leitungen vorgenommen wird.

5. Verfahren nach einem der Ansprüche 1 bis 4, dadurch gekennzeichnet, daß die Umschaltung des Ventilators während des Absaugbetriebs periodisch jeweils für eine vorgebbare, vorzugsweise einstellbare Zeit wiederholt wird.

6. Verfahren nach einem der Ansprüche 1 bis 5, dadurch gekennzeichnet, daß die Umschaltung des Ventilators nach dessen Inbetriebnahme und zu Beginn des Absaugbetriebes für eine vorgegebene Schutzzeit verhindert wird.

7. Verfahren nach einem der Ansprüche 1 bis 6, dadurch gekennzeichnet, daß die Umschaltung des Ventilators nur gegen Ende des Absaugbetriebes vorgenommen wird.

8. Verfahren nach einem der Ansprüche 1 bis 7, dadurch gekennzeichnet, daß in den Endphasen des Absaugbetriebes der über die Überdruck-Abgangsleitung (44) des Ventilators abgegebene angesaugte Wasserdampf in den Raum zwischen der Abdeckfolie (11) und der Oberfläche (38) der zu behandelnden Bodenschicht (39) eingeleitet wird.

9. Verfahren nach einem der Ansprüche 1 bis 8, dadurch gekennzeichnet, daß in der Anfangsphase des Absaugbetriebes mit reduziertem oder mit langsam zunehmendem Unterdruck abgesaugt wird.

## Claims

1. Process for treating a loose layer of earth with steam which is introduced under pressure between a foil (11) covering the surface (38) of the earth to be treated (39) by help of a conduit system having branch tubes (26, 29, 32) arranged upon the surface of the earth to be treated, the open ends (28, 31, 33) of said branch tubes being pushed in a predetermined pattern into the earth to be treated until they nearly reach the interface (40) between the earth to be treated and the solid subsoil, for steam-suction by help of a vacuum-generator, characterised in that, a vacuum-generator (20) in the form of a ventilator having a vacuum-suction pipe (22) and a pressureoutlet pipe (44) is used, which is during the suction treatment at least once switched over to create pressure in the suction pipe (22) and the conduit system tothereby create air spaces (48) near the open ends (28, 31, 33) of the branch tubes (26, 29, 32).

2. Process as claimed in claim 1, characterised in that, the switch-over of the ventilator is performed by a hand operated valve (45).

3. Process as claimed in claim 1, characterised in that, the switch-over is performed by help of an electrically operated valve.

4. Process as claimed in claim 1,

characterised in that, the vacuum-suction pipe (22) and the pressure-outlet pipe (44) of the ventilator are provided with a quick coupling and that the switchover of the ventilator is accomplished by a changeover of the associated conduits.

5. Process as claimed in one of the claims 1 to 4, characterised in that the switch-over of the ventilator is performed periodically during the suction treatment, during a predetermined, preferably ajustable time.

6. Process as claimed in one of the claims 1 to 5, characterised in that the switch-over of the ventilator is prevented after its starting and at the beginning of the suction treatment during a predetermined protection time.

7. Process as claimed in one of the claims 1 to 6, characterised in that the switch-over of the ventilator is performed only near the end of the suction treatment.

8. Process as claimed in one of the claims 1 to 7, characterised in that during the endphases of the suction treatment, the steam leaving the pressure-outlet (44) of the ventilator is introduced in the space between the cover-foil (11) and the surface (38) of the earth to be treated (39).

9. Process as claimed in one of the claims 1 to 8, characterised in that during the starting phase of the suction treatment, the suction is performed with reduced vacuum or with slowly increasing vacuum.

**Revendications**

1. Procédé de traitement d'une couche de terre aérée au moyen de vapeur d'eau, qui est envoyée sous pression entre un film de couverture (11) recouvrant la couche de terre à traiter (39) et la surface (38) de la couche de terre (39) et est aspirée au moyen d'un dispositif produisant une dépression (20) par l'intermédiaire d'un système de tubes disposé sur la surface (38) de la couche de terre à traiter (39) et comportant des conduites de dérivation (26, 29, 32) qui sont enfoncées, avec leurs extrémités ouvertes (28, 31, 33) dans un réseau préformé jusqu'à la couche de séparation (40) entre la couche de terre à traiter et le sous-sol dur,
caractérisé en ce qu'on utilise comme dispositif produisant une dépression (20) un ventilateur muni d'une conduite d'aspiration par dépression (22) et d'une conduite de sortie en surpression (44) et qui est, pendant le fonctionnement en aspiration, inversé au moins une fois pour l'introduction d'une surpression par la conduite d'aspiration (22) dans le système de tubes pour former des réservoirs d'air (48) dans la zone des extrémités ouvertes (28, 31, 33) des conduites de dérivation (26, 29, 32).

2. Procédé selon la revendication 1, caractérisé en ce que l'inversion du ventilateur est effectuée au moyen d'une soupape (45) pouvant être inversée manuellement.

3. Procédé selon la revendication 1, caractérisé en ce que l'inversion du ventilateur est effectuée au moyen d'une soupape actionnable électriquement.

4. Procédé selon la revendication 1, caractérisé en ce que la conduite d'aspiration par dépression (22) et la conduite de sortie en surpression (44) du ventilateur sont munies de raccords rapides et que l'inversion du ventilateur (20) s'effectue par permutation des conducteurs qui y sont accouplés.

5. Procédé selon l'une quelconque des revendications 1 à 4, caractérisé en ce que l'inversion du ventilateur pendant le fonctionnement en aspiration est répétée périodiquement, à chaque fois pour une durée prédéfinissable, de préférence ajustable.

6. Procédé selon l'une quelconque des revendications 1 à 5, caractérisé en ce que l'inversion du ventilateur est empêchée, pour une durée de protection prédéfinie, après la mise en service de celui-ci et au début du fonctionnement en aspiration.

7. Procédé selon l'une quelconque des revendications 1 à 6, caractérisé en ce que l'inversion du ventilateur n'est effectuée que vers la fin du fonctionnement en aspiration.

8. Procédé selon l'une quelconque des revendications 1 à 7, caractérisé en ce que dans les phases finales du fonctionnement en aspiration la vapeur d'eau aspirée délivrée par la conduite de sortie en surpression (44) du ventilateur est introduite dans l'espace entre le film de couverture (11) et la surface (38) de la couche de terre à traiter (39).

9. Procédé selon l'une quelconque des revendications 1 à 8, caractérisé en ce que, dans la phase initiale du fonctionnement en aspiration, l'aspiration s'effectue avec une dépression réduite ou une dépression s'accroissant lentement.

FIG.1

FIG.2

EP 0 333 896 B1

FIG.3

EP 0 333 896 B1